# EUROPÄISCHE PATENTSCHRIFT

(11) **EP 1 978 167 B1**
(45) Veröffentlichungstag und Bekanntmachung des Hinweises auf die Patenterteilung: **10.08.2011**
(21) Anmeldenummer: 08005918.1
(22) Anmeldetag: 27.03.2008
(51) Int. Cl.: E03D 5/00, E03B 1/04

(54) **Rückgewinnungseinrichtung von in Duschen, Waschbecken und/oder Bädern benutzten Waschflüssigkeiten**
Device for recovering washing fluids used in showers, basins and/or baths
Dispositif de récupération de liquides de lavage utilisés dans des douches, des éviers et/ou des baignoires

(30) Priorität: 05.04.2007 IT BZ20070018; 23.08.2007 IT BZ20070029
(43) Veröffentlichungstag der Anmeldung: 08.10.2008
(73) Patentinhaber: Martinello, Settimo, 39057 Appiano (BZ) (IT)
(72) Erfinder: Martinello, Settimo, 39057 Appiano (BZ) (IT)
(74) Vertreter: Ausserer, Anton

(56) Entgegenhaltungen:
- DE-A1- 4 134 272
- DE-A1- 19 519 209

## Beschreibung

Die vorliegende Erfindung bezieht sich auf eine Rückgewinnungseinrichtung von in Duschen, Waschbecken und/oder Bädern benutzten Waschflüssigkeiten.

Der Wasserkonsum im Haushalt in Italien beträgt etwa 200 Liter pro Person und Tag.

Von diesen werden 28% (etwa 50 Liter pro Tag) unter Verwendung der Wasserspülung des WC weggeworfen. Die vorliegende Anmeldung beabsichtigt die Herstellung eines einfachen, mechanisch-elektrischen Systems, das es erlaubt, das vom Abfluss des Waschbeckens und der Dusche abgeführte Wasser zu sammeln und es für die Benutzung der Wasserspülung des WC wieder zu verwenden.

In der Veröffentlichung DE 41 34 272 wird eine Einrichtung für Wasserrecycling im Haushalt oder Gewerbe beschrieben, bei der benutztes Wasser aus der Badewanne, Dusche oder Waschmaschine in einem Behälter gesammelt und zur Wiederverwendung aufbewahrt wird, bei der ein Verteilungsbehälter über eine Rohrleitung und eine zwischengeschaltete Pumpe mit einer Speicherbehälter verbunden ist, bei der überdies mit dem Verteilungsbehälter der Abfluss der Badewanne, der Abfluss der Dusche und der Abfluss der Waschmaschine verbunden ist, bei der am Verteilungsbehälter ein Niveauschalter vorgesehen ist, der sich mit der Pumpe über eine elektrische Leitung in Verbindung steht, wobei in der vom Speicherbehälter zum Toilettenbecken führende Leitung ein von Hand betätigbares Ventil zwischengeschaltet ist, das jedenfalls mit der Frischwasserleitung verbunden ist, wobei das Ventil solche Mittel besitzt, die nach dem Durchfließen der erforderlichen Menge an Recyclingwasser eine kleine Menge Frischwasser in das Toilettenbecken fließen lassen.

Auch in der Deutschen Patentanmeldung DE 42 02 088 wird eine Einrichtung für Wasserrecycling im Haushalt oder Gewerbe beschrieben, bei der benutztes Wasser aus der Badewanne, Dusche oder Waschmaschine in einem Behälter gesammelt und zur Wiederverwendung aufbewahrt wird, bei der ein oder mehrere Speicherbehälter mit einem oder mehreren Dosierbehältern für die Toilettenspülung verbunden sind, wobei in den Ausgang des Dosierbehälters oder in die Leitung zwischen Dosierbehälter und Toilettenbecken ein von Hand oder elektrisch betätigbares Ventil eingebaut bzw. zwischengeschaltet ist, wobei in die Schlauchleitung vom Speicherbehälter zum Dosierbehälter eine Pumpe zwischengeschaltet ist, wobei auch eine Vorrichtung für Färbemitteln und/oder Duftmitteln oder Desinfizierungsmittel vorgesehen ist.

Das Dokument DE 295 18 147 U (D1) beschreibt eine Vorrichtung zur Nutzung von Abwasser wie Grauwasser al Spülwasser mit wenigstens einem Abwasserbehälter, der über wenigstens eine als pumpenlose Fallleitung ausgebildete, an wenigstens eine Abwasserquelle angeschlossene Ladeleitung mit Abwasser beaufschlagbar ist und von dem wenigstens eine zu wenigstens einer Spüleinrichtung führende Spülwasserzuleitung abgeht. Der Abwasserbehälter ist im Höhenbereich zwischen der am tiefsten angeordneten, zugeordneten Abwasserquelle und der am höchsten angeordneten, zugeordneten Spüleinrichtung angeordnet und die vom Abwasserbehalter abgehende Spülwasserzuleitung ist als pumpenlose Fallleitung ausgebildet.

Eine Trennung der Schmutzpartikel ist hierbei nicht vorgesehen und die Vorrichtung arbeitet ohne Pumpe und daher mit einer Fallleitung.

Das Dokument DE 202 02 666 U (D2) sieht zwar eine Sammelwanne unterhalb der Duschplatte vor, wobei die Sammelwanne jedoch nicht von den für den Abfluss und die Partikeltrennung vorgesehenen Einrichtungen getrennt ist und somit das Wasserrückgewinnungssystem nicht effizient arbeiten kann.

Die Einrichtungen der oben angegebenen Art besitzen den Hauptnachteil, dass sie nicht für eine kleinste Trennung von festen Schmutzteilen von der wieder zu verwendenden Flüssigkeit vorsehen. Die Einrichtungen bekannter Art sind überdies eher aufwändig in ihrer Herstellung und sind in ihrer Verwendung wenig flexibel.

Die Aufgabe der vorliegenden Erfindung ist daher die Behebung der Probleme, die die Einrichtungen bekannter Art aufweisen.

Eine weitere Aufgabe liegt darin, Einrichtungen dieser Art kompakter und wartungsfreudiger zu gestalten.

Diese Aufgabe wird durch eine Wiedergewinnungseinrichtung von in Duschen, Waschbecken und/oder Bädern benutzten Waschflüssigkeiten gemäß dem kennzeichnenden Teil des Anspruchs 1 und des Anspruchs 6 gelöst.

Eine Weiterbildung der Wiedergewinnungseinrichtung erzielt folgende technische Vorteile.
- Sie beseitigt das Schwimmsystem für die Öffnung des Abflussverschlusses, wobei so die Betriebsweise vereinfacht wird. Der Abfluss erfolgt nämlich einfach über eine Überlaufwanne 204.
- Sie erlaubt auch alle funktionellen Organe in den Behälter unterhalb der Duschplatte aufzunehmen, insbesondere das Relais 306 und das Ventil 308, die zuerst in der WC-Wanne positioniert wurden, sich nun in einer wartungsfreundlichen Fläche 320 und 322 befinden.

Weitere Einzelheiten und Merkmale gehen aus den Patentansprüchen und aus der Beschreibung von bevorzugten Ausführungsbeispielen hervor, die in der beigelegten Zeichnung dargestellt sind. Es zeigen,
- Figur 1: ein Schema einer Wiedergewinnungseinrichtung von in Duschen, Waschbecken und/oder Bädern benutzten Waschflüssigkeiten,
- Figur 2: eine Vorderansicht einer in der Einrichtung aus Figur 1 verwendeten Einzelheit,
- Figur 3: eine schematische Draufsicht eines Wiedergewinnungssystems von in Duschen, Waschbecken und/oder Bädern benutzen Waschflüssigkeiten,
- Figur 4: eine Einzelheit aus Figur 3 in einem schematischen Aufriss, wobei dessen Betriebsweise hervorgehoben wird, und
- Figur 5: ein schematisches Schaubild eines Abflusses des erfindungsgemäßen Systems.

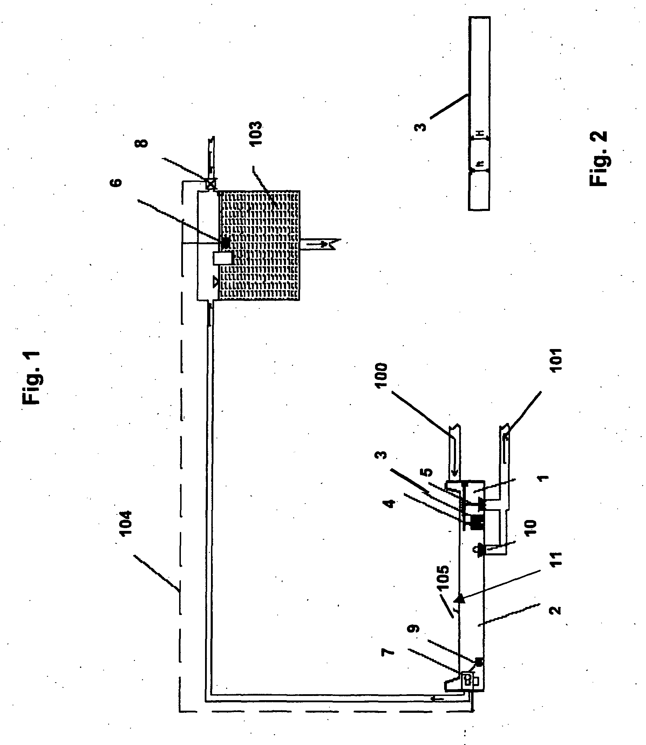

In Figur 1 ist insgesamt eine Wiedergewinnungseinrichtung von in Duschen, Waschbecken und/oder Bädern benutzten Waschflüssigkeiten. Sie umfasst eine erste Wanne 1, die für das Dekantieren von Abwässern bestimmt und mit mindestens einem Eingang 100 versehen ist, der mit einer Abflussstelle von Waschwasser verbunden ist. Die Dekantierwanne 1 hat eine derartige Neigung in Richtung des Abflusses 5, dass der Austritt des "schweren Schmutzes" begünstigt wird. Überdies umfasst sie eine zweite Wanne 2 für das Sammeln von aus der Wanne 1 stammenden Flüssigkeit. Eine Überlauftrennwand 3 trennt die beiden Wannen 1 und 2. Für den Abfluss von Flüssigkeit und dekantierten Teilchen ist ein Kanalisationsabfluss 101 im Boden der Dekantierwanne 1 vorgesehen, der mit einem Verschluss 5 versehen ist, der durch einen Schwimmer 4 in der Sammelwanne 1 in Abhängigkeit des Flüssigkeitsniveaus in derselben anhebbar ist. Eine in der Sammelwanne 2 vorgesehene Tauchpumpe 7, ist durch ein Relais 6 steuerbar, das den Flüssigkeitsbedarf eines Verbrauchers 103, im vorliegenden Fall eine Klosettschüssel angibt. Eine Rohrleitung 104 verbindet die Tauchpumpe 7 der Sammelwanne 2 mit dem Verbraucher 103. Das Relais 6 ist elektrisch mit der Pumpe 7 und einem Ventil 8 des Verbrauchers 103 verbunden und ist durch einen Schwimmer 9 in der Sammelwanne 2 steuerbar, um die Stromzufuhr zur Pumpe 7 zu schließen und die Stromzufuhr eines Ventils 8 für den Flüssigkeitszufluss zum Verbraucher 103 zu öffnen.

Das System sieht vor, das Abwasser der Dusche und des Waschbeckens in einer flachen Wanne zu sammeln, die unterhalb der Duschplatte 105 angeordnet ist. Wird die Spülung verwendet, so erfolgt die neue Beschickung des Wassers, indem dieses der Sammelwanne 2 über die Elektropumpe 7 entnommen und indem gleichzeitig über das Elektroventil 8 die normale Beschickung der Spülung geschlossen wird. Sollte das Recyclingwasser nicht ausreichen, so öffnet sich automatisch das Ventil 8 und der Verbraucher in der Forma eines Spülkastens 103 wird durch das normale Leitungswasser gefüllt.

Das von Dusche und/oder Waschbecken kommende Wasser fließt zuerst durch die kleine Dekantierwanne 1, die, sobald sie voll ist, erlaubt, dass das Wasser in die Sammelwanne überläuft, bis eine ungefähre Menge von 50-80 Litern erreicht wird, die die Verwendung von 6 - 10 Spülungen des WC erlaubt.

Sobald die Sammelwanne 2 voll ist, so öffnet sich über ein einfaches Schwimmerhebelsystem (oder anderem) der Abfluss in die Kanalisation, wobei die Entleerung der Dekantierwanne erlaubt wird, die den von den Abflüssen kommenden Schmutz (Haare usw.) enthält.

Solange die Sammelwanne voll ist, können die Abflüsse unmittelbar in die Kanalisation übergehen, da der Schwimmer erlaubt, den Abfluss 101 stetig offen zu halten.

Das Abwasser des Waschbeckens und der Dusche fließen in die Dekantierwanne 1. Sobald sie voll ist, läuft das Wasser in die Sammelwanne 2 über die Trennwand 3 hindurch über. Sobald die Sammelwanne 2 voll ist, drückt der Schwimmer 4 den Hebel nach oben, der den Abflussverschluss 5 in die Kanalisation öffnet, wobei dem in der Dekantierwanne gesammelten Wasser erlaubt wird, auszutreten, indem der Schmutz mitgerissen wird.

Wird das Wasser der WC-Spülung benutzt, sinkt der normale Schwimmer und aktiviert ein Elektrorelais 6 oder einen elektrischen Schwimmer, der die Beschickung steuert und gleichzeitig schließt das Zuführventil 8 des normalen Wassers.

Die Pumpe 7 beschickt den WC-Kasten mit Recyclingwasser bis das Relais oder der elektrische Schwimmer das Anhalten steuert, sobald der Spülkasten voll ist.

Sollte das Recyclingwasser der Wanne 2 nicht ausreichen um den Spülkasten WC zu füllen, schließt der Schwimmer 9 automatisch die elektrische Speisung der Pumpe 7 und des Ventils 8, wobei so dem Leitungswasser erlaubt wird, das Auffüllen zu vervollständigen.

Weitere Besonderheiten
- Die Überlauftrennwand weist einen kleinen Einschnitt auf, der die Höhe von H auf h herabsetzt; gegeben dadurch, dass der Anteil des "schweren Schmutzes" des Wassers am Boden der Dekantierwanne 1 bleibt, wird über den Einschnitt das Wasser, das die Höhe H erreicht hat, bevor der Abflussverschluss 5 geöffnet wird, nachfolgend den am höchsten gelegenen Teil des Wassers zum Abfließen bringen, wobei von H auf h übergegangen wird, wobei somit die Anteile "leichter Schmutz" (Schaum, die leichteren Elemente des Wassers) beseitigt werden. Der derartige Klärvorgang wird vervollständigt, wobei so sehr gereinigtes Wasser im Umlauf gebracht wird.
- Die Duschplatte wird den Oberteil oder einen Anteil desselben eben haben, der von oben abnehmbar ist; dies wird die Reinigungsarbeit oder die Wartung der beiden untenstehenden Wannen erlauben.
- Die Sammelwanne 2 besitzt gleichfalls einen manuellen Abfluss 10, der bei der Wartung für den Abfluss des Wassers geöffnet werden kann.
- Das Relais 6 und der Schwimmer 9, die das Einschalten der Pumpe 7 und die Aktivierung des Ventils 8 überwachen, können mechanischer Art sein oder elektronische Systeme besitzen, um das Niveau der Flüssigkeit in den entsprechenden Wannen zu überwachen.
- Die Druckseite der Pumpe 7 kann unmittelbar im Ventil 8 zusammenfließen, wobei ein Dreiwege-Ventil verwendet wird.
- Der Schwimmer 4 wird mit einem derartigen Volumen berechnet, dass eine Auftriebskraft erzeugt wird, die ausreicht um das Abheben des Verschlusses 5 zu beginnen, nur wenn das in die Sammelwanne 2 abgeflossene Wasser in die Nähe des höchsten Niveaus zwischen h und H (Figur 2) angekommen ist. Nur dann wird der Verschluss proportional mit dem weiteren Anheben des Wasserniveaus beginnen. Wenn in dieser kombinierten Füllungsfase der Sammelwanne 2 und dem gleichzeitigen Austreten des Wassers aus dem Abfluss, wird das Niveau allmählich die Höhe H erreichen, der Verschluss 5 wird seine höchste Öffnung erreichen, wobei der höchste Abfluss des Wassers aus der Klärwanne 1 und/oder des Wassers der letzten Ankunft aus der Dusche oder aus anderen Abflüssen erlaubt wird.
- Wird die Wanne überfüllt, so sieht der Überlauf 11 vor, das überschüssige Wasser abfließen zu lassen. Wird überdies die Überlaufbohrung auf die Höhe "h" gesetzt, so kann der Abfluss des "leichten Schmutzes" automatisch erfolgen.
- Die Typologie des Speicherbehälters unterhalb der Duschplatte erlaubt, die Einführung in die normale Dicke der Bäderböden, wobei so ermöglicht wird, den Außenaspekt der Bäder selbst unverändert beizubehalten.
- Der Benutzer von Bädern wird sich der Benutzung des Recyclingwassers nicht bewusst sein, dessen System automatisch ist und keines Eingriffs in der Bedienung seitens des Benutzers bedarf.

Die erfindungsgemäße, aus den Wannen und ihren Klärsystemen und der automatischen Aktivierung des Abflusses und der Beschickung des Spülkastens bestehende Einrichtung wurde als Einbau unterhalb einer Duschplatte beschrieben. In Wirklichkeit kann sie auch unabhängig oder unter anderen Badgegenständen hergestellt werden, wie z.B. die Badewanne.

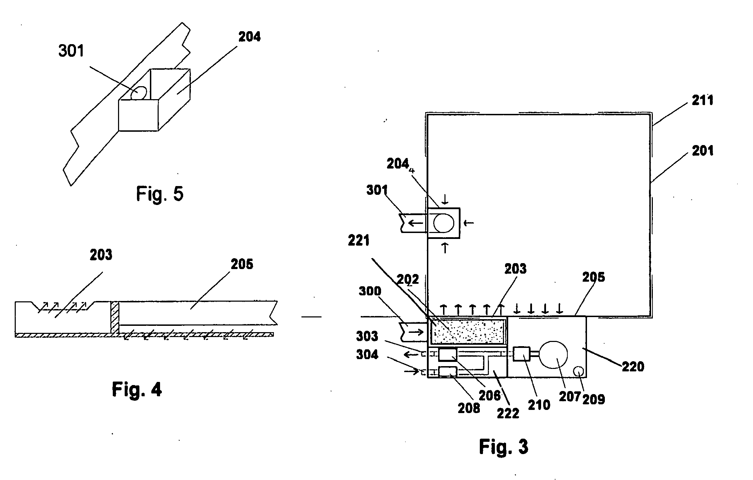

In einer Weiterbildung gemäß Figur 3 bis 5 wird das im Haushalt benutzte Wasser in der Sammelwanne 201 gesammelt, die sich unterhalb der Duschplatte 211 befindet. Das Wasser wird sowohl unmittelbar vom Duschabfluss, mit der oben angeordneten Duschplatte als auch über den Abfluss anderer Verbraucher (Waschbecken, Bidet) 300 gesammelt. Das von der Dusche kommende Wasser ist schon ohne "schweren" Schmutz (Haare), da es über den eigenen, normalen Filter fließt, es wird nur der "leichte" Schmutz (Schaum) hindurchfließen. Das von 300 kommende Wasser wird unmittelbar in die Dekantierkammer 221 abgeladen, wobei der schwere Schmutz (Haare) in der Filterwanne 202 gelassen wird, der bei der gelegentlichen Reinigung abgeführt wird, und läuft über den Überlauf 203 in die Sammelwanne 201 über. Sobald das Wasser den gewünschten Grenzwert (8-20 cm) erreicht, läuft es in die Überlaufwanne 204 über und tritt unmittelbar am Abfluss 301 aus. Das Wasser der nur den leichten Schmutz enthaltenen Wanne 201, d.h. schwimmender Schmutz, geht unterhalb des Überlaufes 205 in den Wannenteil 220 über, wo die Pumpe 207 positioniert ist, wobei andererseits der gesamte leichte Schmutz zurückgelassen wird, der die Neigung besitzt, über den Überlauf 204 auszutreten, jedes Mal, wenn das ankommende Wasser die Grenze überschreitet.

Wird die Spülkastentaste des WC aktiviert, die mit 303 verbunden ist, kommt das normale Leitungswasser direkt über 304 an. Unmittelbar beim Durchfluss des Wassers, schließt der Relaisflussfühler 206 den Kontakt, wobei so die Schließung des Zufuhrventils 208 gesteuert wird, und gleichzeitig die Pumpe 207 aktiviert wird. Das Schwimmerrelais 209 erlaubt zu überwachen, dass genügend Wasser in der Wanne 201 und 220 vorliegt und, wenn nicht, erlaubt es nicht die Schließung des Ventils 208 (immer offen) noch die Aktivierung der Pumpe 207. Das Rückschlagventil 210 vermeidet, dass das von 304 kommende Wasser in 220 eintritt, sondern ausschließlich nach 303 fließt.

In einer Ausführungsform sind alle Arbeitselemente des Wasserstroms in den drei Kammern 220, 221, 222 positioniert. Die Filterwanne 202 ist in der Kammer 221 angeordnet, die von 201 über den Überlauf 203 getrennt ist. Der Flusssensor 206 und das Ventil 208 sind in der Kammer 222 angeordnet, die einzige die nicht vom Wasser überflutet ist. Die Pumpe 207, der Niveaufühler 209 sind in der Kammer 220 angeordnet, wo der Überlauf 205 den Durchfluss von nur gereinigten Wasser erlaubt.

Bei andauernder Betriebsweise wird das Spülkastenwasser über die Pumpe 207 gespeist, wenn die Spülung unabhängig den eigenen Eingang schließt, da sie schon voll ist, das Wasser hört auf von 303 zu fließen und somit öffnet der Flussfühler 206 von Neuem den Kontakt, wobei die Pumpe angehalten wird und das Ventil 208 nicht mehr gespeist wird.

Bei Wartung kann der Deckel geöffnet werden, der den Außenteil der Duschplatte 220, 221, 222 bedeckt und alle Betriebsorgane enthält. Somit kann die Wanne 202 ausgezogen werden, um sie von Schmutzansammlungen zu befreien.

### Bezugsziffernliste

- 201: Sammelwanne der Höhe H (8-20 cm)
- 202: ausziehbare Sammelwanne für schweren Schmutz
- 203: Überlauf oberer Wasserspiegel h (7-19 cm)
- 204: Überlaufwanne h (7-19 cm)
- 205: Überlauf unterer Übergang
- 206: Relaisflussfühler (schließt den Kontakt bei Wasserdurchfluss)
- 207: Pumpe 12/24 V
- 208: Immer offenes Ventil (schließt wenn bei 12/24 V gespeist)
- 209: Schwimmerrelais (öffnet den Kontakt, wenn der Schwimmer sich unten befindet - wenig Wasser)
- 210: Rückschlagventil
- 211: Duschplatte
- 200: Kammer gereinigtes Wasser
- 221: Kammer Schmutzwasser in Ankunft
- 222: Kammer Überwachungsorgane mit elektrischem Betrieb
- 300: Eintritt von Recyclingwasser, Waschbecken, Bidet, ...,
- 301: Abfluss
- 303: Wasserrohrleitung zur Spülung WC
- 304: Eintritt Haushaltswasser

## Patentansprüche

1. Wiedergewinnungseinrichtung von in Duschen, Waschbecken und/oder Bädern benutzten Waschflüssigkeiten, umfassend:
eine erste Dekantierwanne (1), die mit mindestens einem mit einer Abflussstelle von Waschwasser verbundenen Eintritt (100) versehen ist,
eine zweite Sammelwanne (2) zum Sammeln von einer aus der ersten Dekantierkammer (1) stammenden Flüssigkeit,
eine Überlauftrennwand (3) zur Trennung der beiden Wannen (1, 2), **gekennzeichnet durch**:
einen Kanalisationsabfluss im Boden der ersten Dekantierkammer (1) für den Abfluss in die Kanalisation (101),
einen **durch** einen in Abhängigkeit des Flüssigkeitsniveaus anhebbaren Schwimmer (4) in der zweiten Sammelwanne (2) zum Steuern des Abflusses,
eine Tauchpumpe (7) in der zweiten Sammelwanne (2), wobei die Tauchpumpe **durch** ein den Bedarf an Flüssigkeit eines Verbrauchers (103) steuerbares Relais (6) oder einen elektrischen Schwimmer gesteuert wird und eine Rohrleitung (104) aufweist,
wobei die Rohrleitung die Pumpe (7) der zweiten Sammelwanne mit dem Verbraucher (103) und dem Relais (6) oder dem elektrischen Schwimmer verbindet, wobei das Relais mit der Pumpe (7) und einem Ventil (8) des Verbrauchers (103)elektrisch verbunden und **durch** einen Schwimmer (9) in der zweiten Sammelwanne (2) gesteuert wird,
um die elektrische Speisung der Pumpe (7) zu schließen und die elektrische Speisung eines Ventils (8) für einen Flüssigkeitszufluss zum Verbraucher (103) zu öffnen.

2. Einrichtung nach Anspruch 1, **dadurch gekennzeichnet, dass** der Verbraucher ein Spülkasten (103) ist.

3. Einrichtung nach Anspruch 1, **dadurch gekennzeichnet, dass** die Abflussstelle jene einer Dusche, eines Waschbeckens, einer Badewanne ist.

4. Einrichtung nach Anspruch 1, **dadurch gekennzeichnet, dass** die Trennwand (3) mit Überlauf einen kleinen Einschnitt aufweist, der die Höhe von H auf h herabsetzt, gegeben **dadurch**, dass der Anteil des "schweren Schmutzes" des Wassers am Boden der Dekantierwanne (1), wobei über den Einschnitt das Wasser, das die Höhe H erreicht haben wird, bevor der Abschlussverschluss (5) geöffnet ist, nachfolgend den höchstgelegenen Anteil des Wasser abfließen lassen kann, wobei von H auf h übergegangen wird, und so die Teile "leichter Schmutz" wie Schaum, die leichteren Elemente des Wassers beseitigt werden.

5. Einrichtung nach den vorstehenden Ansprüchen, **dadurch gekennzeichnet, dass** die Dekantierwanne (1) eine derartige Neigung in Richtung des Abflusses (5) besitzt, dass der Austritt des "schweren Schmutzes" begünstigt wird.

6. Wiedergewinnungseinrichtung von benutzten Waschflüssigkeiten in Duschen, umfassend:
eine Sammelwanne (201), in montiertem Zustand unterhalb einer Duschplatte, mit mindestens einem Eintritt (300), der mit einer Abflussstelle von Waschwasser verbunden ist, und einen von der Sammelwanne (201) abgehenden Kanalisationsabfluss (301)
**dadurch gekennzeichnet, dass** sie weiterhin umfasst:
eine mit dem Eintritt (300) verbundene Dekantierkammer (221) von Schmutzwasser mit ausziehbarer Wanne (202),
eine zwischen der ausziehbaren Wanne (202) und der Sammelwanne (201) angeordnete einen Überlauf (203) und einen in Richtung der Sammelwanne unteren Durchfluss (205) aufweisende Wand,
wobei das Überlaufwasser in die Sammelkammer (201) und das Wasser des unteren Durchflusses in eine Kammer (220) fließt,
einen Überlauf unter dem unteren Durchfluss (205),
eine in der Kammer (220) positionierte Tauchpumpe (207),
eine Rohrleitung (304) für den Eintritt von Haushaltswasser, verbunden mit der Tauchpumpe (207) und dem Verbraucher (303),
einen Relaisflussfühler (206), der die Tauchpumpe (207) und das vom Relaisschwimmer (209) in der Sammelwanne überwachte Ventil (208) steuert, um die elektrische Versorgung der Pumpe (207) und
des Ventils (208) bei Abwesenheit von Wasser in der Sammelwanne (201 und 202) zu unterbrechen, wobei der Kanalisationsabfluss (301) über einen Überlauf (204) verbunden ist, und dass die Arbeitselemente des Wasserflusses wie die Pumpe (207), das Rückschlagventil (210) und
das Schwimmerrelais (209) in einem Raum untergebracht sind, insbesondere der Kammer (220) der/die von der Dekantierkammer (221) getrennt ist.

7. Einrichtung nach Anspruch 6, **dadurch gekennzeichnet, dass** alle elektrischen Betriebsorgane wie der Relaisflussfühler (206), das Ventil (208) und das Schwimmerrelais (209) in Kammern untergebracht sind, die an der Sammelkammer (201) außerhalb der Fläche der Duschplatte anliegen.

## Claims

1. Installation for recovering washing fluids used in showers, basins and/or baths, comprising:
a first decantation bowl (1) provided with at least an inlet (100) connected with a washing water drain point,
a second collecting bowl (2), for collecting a liquid coming from the first decantation bowl (1)
an overflow separation wall (3), adapted to separate the two bowls (1, 2),
**characterized by**
a sewer discharge in the bottom of the first decantation bowl (1) for the discharge into the sewerage system,
a float (4) raisable as a function of the liquid level in the second collecting bowl to drive the discharge,
an immersed pump (7) in the second collecting bowl (2), the immersed pump being drivable by a relay (6), or electric float, drivable by the liquid demand from a user (103), and featuring a piping (104), the piping connecting the pump (7) of the second collecting bowl with the user (103), the relay (6), or electric float, being electrically connected with the pump (7) and a valve (8) of the user (103) and driven by a float (9) in the second collecting bowl (2) for interrupting the electric supply to the pump (7) and providing the electric supply of a valve (8) for supplying liquid to the user (103).

2. Installation according to claim 1, **characterised in that** the user is a flusher (103).

3. Installation according to claim 1, **characterised in that** the discharge point is of a a shower, a basin or a bath.

4. Installation according to claim 1, **characterised in that** the separation wall (3) with overflow features a small notch that lowers the height from H to h, given the fact that the portion of "heavy dirt" of the water lies on the bottom of the decantation bowl (1), through the notch the water reaching the height H before opening of the drain plug (5) can successively let flow the higher part of the water, going from H to h, and getting rid of the portions of "light dirt" such as foam, and elements lighter than water.

5. Installation according to one of the previous claims, **characterised in that** the decantation bowl (1) slopes toward the drain (5) in such a way as to promote the discharge of the "heavy dirt".

6. Installation for recovering washing fluids used in showers, comprising:
a collecting bowl (201), below a shower tray in its mounted state, with at least an inlet (300) connected to a washing water drain point, and a sewer discharge (301) derived from the collecting bowl (201)
**characterised in that** it further comprises:
a dirty water decantation chamber (221) connected with the inlet through an extractable reservoir (202),
a wall placed between the extractable reservoir (202) and the collecting bowl (201) and featuring a weir (203) and a lower passage (205) in the direction of the collecting bowl,
the overflow water flowing in the collecting chamber (201) and the water from the lower passage in a chamber (220),
a weir to the lower passage (205),
an immersed pump (207), placed in the chamber (220),
a piping (304) for domestic water inlet connected with the immersed pump (207) and with the user (303),
a relay flow sensor (206), driving the immersed pump (207) and the valve (208) controlled by the relay float (209) in the collecting bowl for interrupting electric supply to the pump (207) and to the valve (208) in case of lack of water in the collecting bowl (201 and 220), the sewer discharge (301) being connected through an overflow (204) and the elements operating on the water flow like the pump (207), the one-way valve (210) and the float relay (209) being placed in an area, in particular in a chamber (220) separated from the decantation chamber (221).

7. Installation according to claim 6, **characterised by** the fact that all the electric working members like the relay flow sensor (206), the valve (208) and the float relay (209) are set in chambers next to the collecting bowl (201) outside the shower tray area.

## Revendications

1. Installation de récupération des liquides de lavage employés en douches, lavabos et/ou baignoires, comprenant:
un premier bassin (1) de décantation doué d'au moins une entrée (100) reliée à un point d'écoulement de l'eau de lavage,
un deuxième bassin (2) de réception, pour la réception d'un liquide provenant du premier bassin de décantation (1) une paroi de division de débordement (3), agencée pour séparer les deux bassins (1, 2), **caractérisée par**
un écoulement à l'égout sur le fond du premier bassin (1) de décantation pour l'écoulement vers l'égout (101),
un flotteur (4) soulevable en raison d'un niveau de liquide dans le deuxième bassin (2) de réception pour commander l'écoulement,
une pompe à immersion (7) dans le deuxième bassin (2) de réception,
la pompe à immersion étant commandable par un relais (6), ou flotteur électrique, commandable par la demande de liquide d'un utilisateur (103) e présentant une tuyauterie (104), la tuyauterie (104) reliant la pompe du deuxième bassin de réception avec l'utilisateur (103), le relais (6), ou flotteur électrique, étant relié électriquement avec la pompe (7) et une vanne (8) de l'utilisateur (103) et commandé par un flotteur (9) dans le deuxième bassin (2) de réception pour interrompre une alimentation électrique de la pompe (7) et fournir l'alimentation électrique de la vanne (8) pour un débit de liquide à l'utilisateur (103).

2. Installation selon la revendication 1, **caractérisée en ce que** l'utilisateur est une chasse d'eau (103).

3. Installation selon la revendication 1, **caractérisée par le fait que** le point d'écoulement est d'une douche, d'un lavabo ou d'une baignore.

4. Installation selon la revendication 1, **caractérisée par le fait que** la paroi de division (4) avec débordement porte une petite encoche qui abaisse la hauteur de H à h, vu que la part de « saleté lourde » de l'eau reste sur le fond du bassin (1) de décantation, à travers l'encoche l'eau qui rejoint le niveau H avant l'ouverture du bouchon de découlement (5) peut ensuite laisser débiter la partie plus en surface, passant de H à h, et éliminant ainsi les parties de « saleté légère » comme la mousse, les éléments plus léger que l'eau.

5. Installation selon les revendications précédents, **caractérisée en ce que** le bassin de décantation (1) est incliné vers le découlement (5) de façon à aider l'évacuation de la « saleté lourde ».

6. Installation de récupération des liquides employés dans les douches, comprenant :
un bassin (201) de réception, au-dessous du plateau de douche à l'état monté, avec au moins une entrée (300) reliée à un point de découlement de l'eau de lavage, et un écoulement à l'égout (301) dérivé du bassin de réception (201),
**caractérisée en ce qu'**elle comprend encore:
une chambre (221) de décantation de l'eau sale reliée avec l'entrée avec une cuvette amovible (202),
une paroi placée entre la cuvette amovible (202) et le bassin (201) de réception et présentant un déversoir (203) et un passage inférieur (205) dans la direction du bassin de réception,
l'eau de déversement débitant dans la chambre de réception (201) e l'eau du passage inférieur dans une chambre (220),
un déverseur au passage inférieur (205),
une pompe à immersion (207), placée dans la chambre (220),
une tuyauterie (304) pour l'accès de l'eau domestique reliée avec la pompe à immersion (207) et avec l'utilisateur (303),
un senseur de débit à relais (206), commandant la pompe à immersion (207) et la vanne (208) contrôlée par le flotteur à relais (209) dans le bassin de réception pour interrompre l'alimentation électrique à la pompe (207) et à la vanne (208) en cas d'absence d'eau dans le bassin de réception (201 et 220), le découlement à l'égout (301) étant relié par le biais d'un trop-plein (204) et que les éléments qui opèrent sur le débit d'eau comme la pompe (207), la vanne de retenue (210) et le relais à flotteur (209) sont placés dans une zone, notamment une chambre (220) séparée de la chambre de décantation (221).

7. Installation selon la revendication 6, **caractérisée par le fait que** tous les organes de fonctionnement électrique comme le senseur de débit à relais (206), la vanne (208) et le relais à flotteur (209) sont placés dans des chambres à côté du bassin de réception (201) en dehors de la zone du plateau de douche.
